# EUROPEAN PATENT APPLICATION

(11) **EP 4 654 495 A1**
(43) Date of publication of application: **26.11.2025**
(21) Application number: 24769663.6
(22) Date of filing: 24.01.2024
(51) Int. Cl.: H04B 10/61

(54) **CLOCK INFORMATION TRANSMISSION METHOD, APPARATUS AND SYSTEM**

(30) Priority: 13.03.2023 CN 202310273223
(71) Applicant: Huawei Technologies Co., Ltd., Shenzhen, Guangdong 518129 (CN)
(72) Inventor: LIU, Xiang, Shenzhen, Guangdong 518129 (CN); FAN, Qirui, Shenzhen, Guangdong 518129 (CN); ZHENG, Shuqian, Shenzhen, Guangdong 518129 (CN)
(74) Representative: Huawei European IPR
(86) International application number: PCT/CN2024/073768
(87) International publication number: WO 2024/187967

(57) **Abstract**

This application provides a clock information transmission method, an apparatus, and a system, and may be applied to an optical transport network. The method includes: generating first clock information, where the first clock information is phase difference information or clock fault information, and the first clock information is used to recover a clock of a first data frame; mapping the first data frame carrying a plurality of pieces of first clock information to a second data frame; and sending the second data frame. According to the clock information transmission method provided in this application, a bit error rate of a system can be reduced, and transmission quality of the system can be improved.

## Description

This application claims priority to Chinese Patent Application No. 202310273223.4, filed with the China National Intellectual Property Administration on March 13, 2023 and entitled "CLOCK INFORMATION TRANSMISSION METHOD, APPARATUS, AND SYSTEM", which is incorporated herein by reference in its entirety.

### TECHNICAL FIELD

This application relates to the field of optical transport technologies, and more specifically, to a clock information transmission method, an apparatus, and a system.

### BACKGROUND

Based on a wavelength division multiplexing technology, an optical transport network (optical transport network, OTN) can provide a higher transmission rate, higher transmission efficiency, and a better operations, administration and maintenance (operations, administration and maintenance, OAM) capability, and has become a mainstream technology of a backbone transmission network.

In addition to transmission of various types of service data, an OTN system further needs to perform transmission of clock information corresponding to each service. However, a bit error occurs due to various reasons during the transmission of the clock information. Therefore, how to provide accurate clock information for transmission and improve bit error resilience performance of the system is a problem to be resolved.

### SUMMARY

Embodiments of this application provide a clock information transmission method, an apparatus, and a system, to improve bit error resilience performance of a system, so that a destination device can accurately recover a service layer clock, to improve user experience.

According to a first aspect, an embodiment of this application provides a clock information transmission method. The method is applied to an optical transport device, and may be performed by an intermediate device or a component (for example, a chip or a chip system) of the intermediate device. This is not limited in this application. The method includes: generating first clock information, where the first clock information is phase difference information or clock fault information, and the first clock information is used to recover a clock of a first data frame; mapping the first data frame to a second data frame, where the first data frame carries a plurality of pieces of first clock information; and sending the second data frame.

In some embodiments, the first data frame is an OSU frame, and the second data frame is an ODU frame.

The intermediate device includes the generated plurality of pieces of first clock information in the first data frame, and transmits the plurality of pieces of first clock information in the first data frame to a downstream device via the second data frame. In the foregoing solution, accuracy of transferring the first clock information is improved, a bit error rate of a system is reduced, transmission quality of the system is improved, and system reliability is improved.

With reference to the first aspect, in some implementations of the first aspect, the first data frame is of a multi-row multi-column structure, and the plurality of pieces of first clock information are carried in a plurality of consecutive columns of a same row of the first data frame. The plurality of pieces of clock information are carried in the same row of the data frame, so that a receiving device can quickly obtain the plurality of pieces of clock information. This ensures system reliability and stability without increasing an information processing delay. In addition, the plurality of pieces of same clock information are carried only in one row of the data frame. Therefore, by using the foregoing solution, a plurality of pieces of different clock information can be carried in a plurality of rows of the data frame, that is, different clock information is carried in a unit of each row, so that a destination device can quickly respond to a clock jitter of the system, improving a response speed of the destination device to the system.

With reference to the first aspect, in some implementations of the first aspect, the method further includes: receiving the second data frame from an upstream device; obtaining, through demapping the second data frame from the upstream device, the first data frame from the upstream device; obtaining the plurality of pieces of clock information in the first data frame of the upstream device, where each piece of clock information in the plurality of pieces of clock information is phase difference information or clock fault information; and determining, based on the plurality of pieces of clock information, second clock information generated by the upstream device. Generating the first clock information includes: generating the first clock information based on the second clock information generated by the upstream device. In this solution, the intermediate device confirms and corrects the received plurality of pieces of clock information from the upstream, so that reliability in the clock information transmission process of the intermediate device can be improved, and bit error resilience performance of the system can be further improved.

With reference to the first aspect, in some implementations of the first aspect, the plurality of pieces of first clock information are carried in three adjacent columns in a 1905^{th} column to a 1920^{th} column of any row in a 1^{st} row to a 4^{th} row of the first data frame, or carried in three adjacent columns in a 1^{st} column to a 14^{th} column of any row in the 1^{st} row to the 4^{th} row of the first data frame. When the first data frame is an OSU frame, an overhead area used to carry the first clock information is obtained through re-division from three adjacent columns in a 1905^{th} column to a 1920^{th} column of a payload area of the data frame, so that it can be ensured that an original overhead area of the data frame is not affected, to ensure reliability performance of the system. Alternatively, three adjacent columns in a 1^{st} column to a 14^{th} column of the overhead area of the data frame are multiplexed to carry the first clock information, so that overhead resources can be saved, to improve transmission efficiency of the clock information.

With reference to the first aspect, in some implementations of the first aspect, the first data frame is of a multi-row multi-column structure, the plurality of pieces of first clock information is carried in a plurality of columns of a plurality of rows of the first data frame, a quantity of the plurality of rows, a quantity of the plurality of columns, and a quantity of the plurality of pieces of first clock information are the same, the plurality of rows are consecutive, and the plurality of columns of each row of the plurality of rows are consecutive. The same clock information is carried in a plurality of bytes of the data frame in staggered rows and staggered columns, so that reliability of clock information transmission can be further improved, and the bit error rate of the system is reduced.

With reference to the first aspect, in some implementations of the first aspect, the plurality of columns of the plurality of rows have a same location.

With reference to the first aspect, in some implementations of the first aspect, the plurality of pieces of first clock information are carried in three adjacent columns in a 1905^{th} column to a 1920^{th} column of a 1^{st} row to a 4^{th} row of the first data frame, or carried in three adjacent columns in a 1^{st} column to a 14^{th} column of the 1^{st} row to the 4^{th} row of the first data frame.

With reference to the first aspect, in some implementations of the first aspect, the plurality of columns of at least one row of the plurality of rows has a location different from that of the plurality of columns of at least another row different from the at least one row in the plurality of rows.

With reference to the first aspect, in some implementations of the first aspect, the plurality of pieces of first clock information are carried in three columns of a 1^{st} row to a 4^{th} row of the first data frame, the three columns of the 1^{st} row of the first data frame are an 8^{th} column to a 10^{th} column or a 9^{th} column to an 11^{th} column of the first data frame, and the three columns of the 2^{nd} row to the 4^{th} row of the first data frame are a 1^{st} column to a 3^{rd} column of the first data frame.

With reference to the first aspect, in some implementations of the first aspect, the first data frame is of a multi-row multi-column structure, and the plurality of pieces of first clock information are carried in a same column of a plurality of consecutive rows of the first data frame.

With reference to the first aspect, in some implementations of the first aspect, the plurality of pieces of first clock information are carried in any column of a 1905^{th} column to a 1920^{th} column of a 1^{st} row to a 4^{th} row of the first data frame, or carried in any column of a 1^{st} column to a 14^{th} column of the 1^{st} row to the 4^{th} row of the first data frame.

With reference to the first aspect, in some implementations of the first aspect, the plurality of pieces of first clock information carried in a same column of the plurality of consecutive rows of the first data frame correspond to the same first data frame. Based on this solution, one data frame is used to carry only the same clock information, so that the destination device does not need to perform additional positioning on the received clock information and the corresponding data frame. This simplifies a clock recovery procedure of the destination device.

With reference to the first aspect, in some implementations of the first aspect, the plurality of pieces of first clock information are carried in a 1^{st} column of a 2^{nd} row to a 4^{th} row of the first data frame, or carried in a 3^{rd} column of the 2^{nd} row to the 4^{th} row of the first data frame.

With reference to the first aspect, in some implementations of the first aspect, the first data frame is of a one-row multi-column structure, and the plurality of pieces of first clock information are carried in a same column of a plurality of first data frames.

With reference to the first aspect, in some implementations of the first aspect, a frame structure of the first data frame is 1 row*960 columns of bytes.

With reference to the first aspect, in some implementations of the first aspect, the plurality of pieces of first clock information are carried in any column of a 1^{st} column to an 8^{th} column of three first data frames.

With reference to the first aspect, in some implementations of the first aspect, a quantity of bytes carrying the first clock information is 1.

According to a second aspect, an embodiment of this application provides a clock information transmission method. The method is applied to an optical transport device, and may be performed by a destination device or a component (for example, a chip or a chip system) of the destination device. This is not limited in this application. The method includes: receiving a second data frame from an upstream device; obtaining, through demapping the second data frame from the upstream device, a first data frame from the upstream device; obtaining the plurality of pieces of clock information in the first data frame of the upstream device, where each piece of clock information in the plurality of pieces of clock information is phase difference information or clock fault information; determining, based on the plurality of pieces of clock information, first clock information generated by the upstream device; and generating second clock information of the current device based on the first clock information generated by the upstream device, where the second clock information is used to recover a clock of the first data frame.

For a carrying manner of the plurality of pieces of clock information carried in the first data frame of the upstream device, refer to the related descriptions in the first aspect. Details are not described herein again.

Based on the foregoing solution, the destination device determines, based on the obtained plurality of pieces of clock information, accurate clock information generated by the upstream device, and recovers the clock of the first data frame by using the accurate clock information. This process can ensure accuracy of clock recovery of the destination device, improving system reliability.

According to a third aspect, an embodiment of this application provides a clock information transmission system. The system includes a sending device and a destination device. Alternatively, the system includes a sending device, a destination device, and at least one first device (also referred to as an intermediate device). The destination device is configured to perform the method according to any one of the second aspect or the possible implementations of the second aspect. The intermediate device is configured to perform the method according to any one of the first aspect or the possible implementations of the first aspect.

According to a fourth aspect, an embodiment of this application provides an optical transport apparatus. The apparatus is configured to perform the method provided in either of the first aspect and the second aspect. Specifically, the optical transport apparatus may include units and/or modules configured to perform the method provided in any one of the first aspect or the foregoing implementations of the first aspect, or the optical transport apparatus may include units and/or modules configured to perform the method provided in any one of the second aspect or the foregoing implementations of the second aspect, for example, a processing module and a transceiver module.

In an implementation, the optical transport apparatus may include units and/or modules configured to perform the method provided in any one of the first aspect or the foregoing implementations of the first aspect, and is a transmitter device. The transceiver module may be a transceiver or an input/output interface. The processing module may be at least one processor. Optionally, the transceiver may be a transceiver circuit. Optionally, the input/output interface may be an input/output circuit.

Alternatively, the optical transport apparatus is a chip, a chip system, or a circuit in the transmitter device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

In another implementation, the optical transport apparatus may include units and/or modules configured to perform the method provided in any one of the second aspect or the foregoing implementations of the second aspect, and is a receiver device. The transceiver module may be a transceiver or an input/output interface. The processing module may be at least one processor. Optionally, the transceiver may be a transceiver circuit. Optionally, the input/output interface may be an input/output circuit.

Alternatively, the optical transport apparatus is a chip, a chip system, or a circuit in the receiver device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fifth aspect, an embodiment of this application provides a processor, configured to perform the methods provided in the foregoing aspects. Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a sixth aspect, an embodiment of this application provides a computer-readable storage medium. The computer-readable storage medium stores program code executed by a device, and the program code is used to perform the method provided in any one of the implementations of the first aspect or the second aspect.

According to a seventh aspect, an embodiment of this application provides a computer program product including instructions. When the computer program product is run on a computer, the computer is enabled to perform the method provided in any one of the implementations of the first aspect or the second aspect.

According to an eighth aspect, an embodiment of this application provides a chip. The chip includes a processor and a communication interface. The processor reads, through the communication interface, instructions stored in a memory, to perform the method provided in any one of the implementations of the first aspect or the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations of the first aspect or the second aspect.

For specific beneficial effects brought by the third aspect to the eighth aspect, refer to the descriptions of the beneficial effects in the first aspect or the second aspect. Details are not described herein again.

### BRIEF DESCRIPTION OF DRAWINGS

FIG. 1 is a diagram of an OTN optical network system to which an embodiment of this application is applicable;
FIG. 2 is a diagram of a possible hardware structure of a network device;
FIG. 3 is a diagram of a structure in which one byte is used to carry clock information according to an embodiment of this application;
FIG. 4 is a first distribution diagram of bytes carrying a plurality of pieces of clock information in a data frame according to an embodiment of this application;
FIG. 5 is a diagram of a possible implementation of carrying clock information in FIG. 4 according to an embodiment of this application;
FIG. 6 is a diagram of a structure of an OSU frame 600 based on byte distribution shown in FIG. 4;
FIG. 7 is a second distribution diagram of bytes carrying a plurality of pieces of clock information in a data frame according to an embodiment of this application;
FIG. 8 is a third distribution diagram of bytes carrying a plurality of pieces of clock information in a data frame according to an embodiment of this application;
FIG. 9 is a fourth distribution diagram of bytes carrying a plurality of pieces of clock information in a data frame according to an embodiment of this application;
FIG. 10 is a fifth distribution diagram of bytes carrying a plurality of pieces of clock information in a data frame according to an embodiment of this application;
FIG. 11 is a diagram of a structure of an OSU frame 1100 based on byte distribution shown in FIG. 10;
FIG. 12 is a schematic flowchart of a clock information transmission method 1200 according to an embodiment of this application;
FIG. 13 is a diagram of a structure of an optical transport device 1300 according to an embodiment of this application; and
FIG. 14 is a diagram of a structure of another optical transport device 1400 according to an embodiment of this application.

### DESCRIPTION OF EMBODIMENTS

The following describes technical solutions of this application with reference to accompanying drawings.

For ease of understanding of embodiments of this application, the following descriptions are provided.
1. In the following text descriptions or accompanying drawings in embodiments of this application, terms such as "first" and "second" and various numbers are merely used for differentiation for ease of description, but do not necessarily describe a specific order or sequence, and are not intended to limit the scope of embodiments of this application. For example, the numbers are used for distinguishing between different information, or distinguishing between different data frames.
2. In the following embodiments of this application, terms such as "include" and any variants thereof mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.
3. In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.
4. In embodiments of this application, a mathematical symbol "*" represents a multiplication sign.
5. In the following embodiments of this application, only an OTN frame in an optical transport network (optical transport network, OTN) is used as an example to describe embodiments. It should be understood that another OTN frame for transport, a metro transport network (metro transport network, MTN) frame, or a new type of OTN frame and a new type of MTN frame that may be defined with development of an OTN technology and an MTN technology are also applicable to this application.
6. In embodiments of this application, a device may also be referred to as a node or a node device, and a sending device may be referred to as a sending node, a transmitter, or a source node. Similarly, a receiving device may be referred to as a receiver device, a receiver, a destination device, or a sink node. An intermediate device may be referred to as an intermediate node. It should be understood that the intermediate device may receive information from an upstream device, or may send information to a downstream device. Therefore, in embodiments of this application, the sending device is a source node or an intermediate node, and the receiving device is a destination node or an intermediate node. Specific determining needs to be performed according to a specific embodiment.
7. In embodiments of this application, "at least one" means one or more, and "a plurality of" means two or more. For example, at least one of a, b, and c may represent a, or b, or c, or a and b, or a and c, or b and c, or a, b, and c, where a, b, and c may be single, or may be plural.
8. In embodiments of this application, an optical transport device may also be referred to as an optical transmission device or the like.
9. In this application, "indicate" may include "directly indicate" and "indirectly indicate". When a piece of information is described as indicating A, the information directly indicates A or indirectly indicates A, but it does not indicate that the information definitely carries A.
10. In embodiments of this application, presetting may include predefinition, for example, predefinition in a protocol. "Predefinition" may be implemented by pre-storing corresponding code or a corresponding table in a device, or may be implemented in another manner of indicating related information. A specific implementation of "predefinition" is not limited in this application.

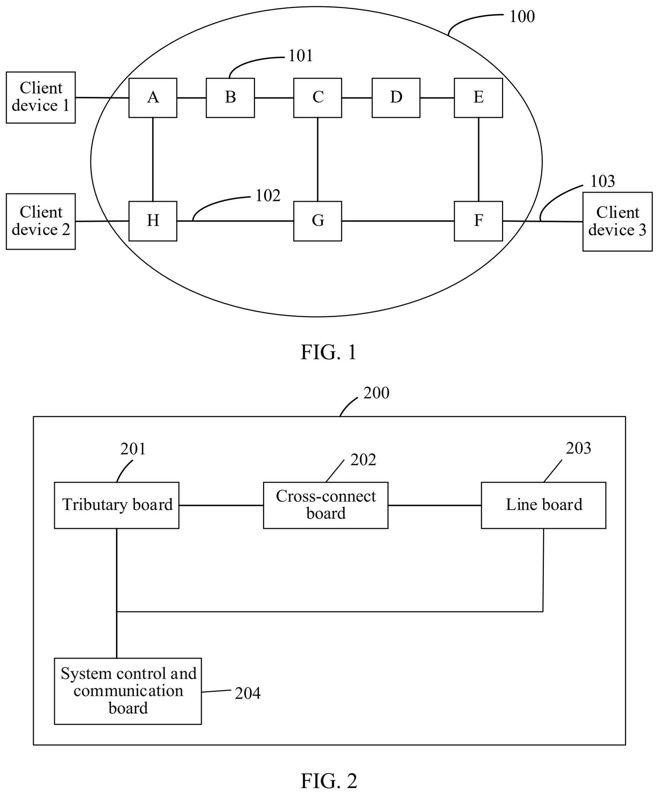

FIG. 1 is a diagram of an OTN optical network system to which an embodiment of this application is applicable. Generally, an OTN optical network is formed by connecting a plurality of devices through optical fibers and may be formed into different types of topologies such as linear, ring, and mesh topologies based on specific requirements. An OTN 100 shown in FIG. 1 includes eight OTN devices 101, namely, devices A to H. 102 indicates an optical fiber, configured to connect two devices. 103 indicates a client service interface, configured to receive or send client service data. As shown in FIG. 1, the OTN 100 is configured to perform transmission of service data for client devices 1 to 3. The client device is connected to the OTN device through the client service interface. For example, in FIG. 1, the client devices 1 to 3 are respectively connected to the OTN devices A, H, and F. In FIG. 1, when the client device 1 needs to communicate with the client device 3, the client device 1 may send service data through the OTN devices A to F. For example, the OTN device A is a sending device, the OTN devices B to E are intermediate devices, and the OTN device F is a receiving device.

Generally, OTN devices are classified into an optical-layer device, an electrical-layer device, and a photoelectric hybrid device. The optical-layer device is a device that can process an optical-layer signal, for example, an optical amplifier (also referred to as an optical line amplifier) or an optical add-drop multiplexer. The optical amplifier is configured to amplify an optical signal, to support a longer transmission distance while ensuring specific performance of the optical signal. The optical add-drop multiplexer is configured to perform space transformation on the optical signal, so that the optical signal can be output from different output ports (sometimes referred to as directions). The electrical-layer device is a device that can process an electrical-layer signal, for example, a device that can process an OTN signal. The photoelectric hybrid device is a device that has a capability of processing an optical-layer signal and an electrical-layer signal. It should be noted that, one OTN device may integrate a plurality of different functions based on a specific integration requirement. Technical solutions provided in this application are applicable to OTN devices that have different forms and degrees of integration and that include an electrical-layer function.

It should be noted that a data frame structure used by an OTN device in embodiments of this application is an OTN frame. The OTN frame is used to carry various service data and provide rich management and monitoring functions. The OTN frame may be an optical data unit (optical data unit k, ODUk) frame, an ODUCn frame, an ODUflex frame, an optical transport unit k (optical transport unit k, OTUk) frame, an OTUCn frame, a flexible OTN (FlexO) frame, or the like. A difference between an ODU frame and an OTU frame lies in that the OTU frame includes an ODU frame and an OTU overhead. k represents different rate levels. For example, k=1 represents 2.5 Gbps, and k=4 represents 100 Gbps. Cn represents a variable rate, and is specifically a rate that is a positive integer multiple of 100 Gbps. Unless otherwise specified, the ODU frame is any one of the ODUk frame, the ODUCn frame, or the ODUflex frame, and the OTU frame is any one of the OTUk frame, the OTUCn frame, or the FlexO frame. With development of OTN technologies, a new type of OTN frame may be defined, and is also applicable to this application.

FIG. 2 is a diagram of a possible hardware structure of a network device, for example, the device A in FIG. 1. Specifically, an OTN device 200 includes a tributary board 201, a cross-connect board 202, a line board 203, an optical-layer processing board (not shown in FIG. 2), and a system control and communication board 204. Based on specific requirements, types and quantities of boards included in a network device may be different. For example, a network device used as a core node includes no tributary board 201. For another example, a network device used as an edge node includes a plurality of tributary boards 201, or includes no optical cross-connect board 202. For still another example, a network device supporting only an electrical-layer function may include no optical-layer processing board.

The tributary board 201, the cross-connect board 202, and the line board 203 are configured to process an electrical-layer signal of an OTN. The tributary board 201 is configured to receive and send various client services such as an SDH service, a packet service, an Ethernet service, and a forward service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame and demap the service data from the data frame. The cross-connect board 202 is configured to exchange data frames, to complete exchange of one or more types of data frames. The line board 203 mainly implements processing of a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex a line-side data frame, or map and demap a line-side data frame. The system control and communication board 204 is configured to implement system control, and specifically, may collect information from different boards or send a control instruction to a corresponding board. It should be noted that, unless otherwise specified, there may be one or more specific components (for example, signal processors). This is not limited in this application. It should be further noted that a type of a board included in the device, a function design of the board, and a quantity of boards are not limited in this application. It should be noted that during specific implementation, two boards mentioned above may be designed as one board. In addition, the network device may further include a standby power supply, a heat dissipation fan, and the like.

With advent of the fifth generation fixed network (fifth generation fixed network, F5G) era, private line service requirements in different scenarios are gradually refined, for example, industry production networks and high-quality user terminals, which have increasing requirements for high-quality connections. These customer services are characterized by a small bandwidth and a large quantity, and require simple, quick, and flexible bandwidth adjustment. Currently, an optical service unit (optical service unit, OSU) frame is used to carry a small-granularity service in an OTN. This process is based on a mapping manner of a flexible tributary unit (flexible tributary unit, TUflex). To be specific, a plurality of services are separately mapped and encapsulated into a plurality of OSUs, different OSUs correspond to different channels of TUflex, and the plurality of channels of TUflex are multiplexed into an optical payload unit (optical payload unit, OPU) frame.

To ensure that a destination device in an OTN system can recover a clock of a data frame in time and efficiently, accuracy of clock information whose transmission is performed by each device in the system needs to be ensured, so that after receiving the correct clock information, the destination device recovers, based on the clock information, a clock of a data frame received by the destination device to be consistent with a clock of a data frame sent by a sending device, ensuring system reliability. Therefore, how to accurately perform transmission of clock information and reduce a bit error rate in clock information transfer is a technical problem that needs to be resolved.

To resolve the foregoing problem, this application provides a clock information transmission method. Same clock information is repeatedly carried in a plurality of bytes of a data frame, and is transmitted to a downstream device, so that the device that receives the clock information can determine, by using a plurality of pieces of clock information, reliable clock information generated by an upstream device, to improve bit error resilience performance of a system and ensuring high-reliability clock recovery.

It should be noted that, in embodiments of this application, clock information is information used to recover a clock of a data frame, and is phase difference information or clock fault information. When clock information received by a destination device is phase difference information, the destination device adjusts, based on the phase difference information, a clock of a received data frame to be consistent with a clock of a data frame of a transmitter. When the clock information received by the destination device is clock fault information, the destination device may determine that a current system is faulty or that the current system is in an unstable state of abnormal jitter, and receive phase difference information from the transmitter after the system is stable. In this application, the phase difference information is an accumulation of phase differences generated by each device in the system. For example, for a first device in the system, phase difference information received by the first device is a sum of phase differences of one or more groups of two neighboring upstream devices in one or more upstream devices that are of the first device and through which the data frame passes, and phase difference information sent by the first device is a sum of a phase difference generated by the first device and the received phase difference information. For each device in the system, a generated phase difference is an integer multiple of a nominal clock period.

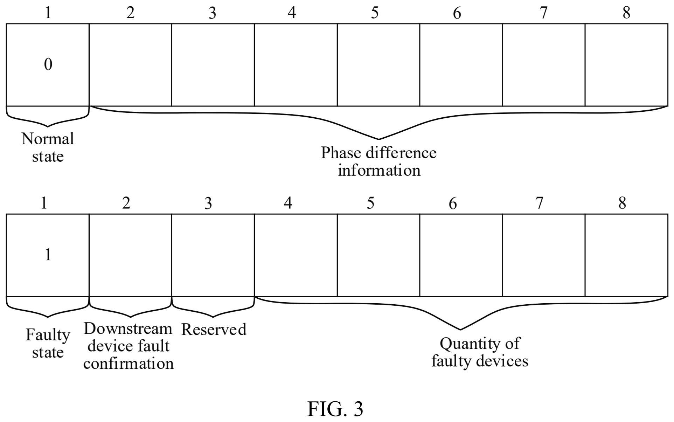

It should be further noted that, in this application, the clock information may be carried by at least one byte of a data frame. For example, FIG. 3 is a diagram of a structure in which one byte is used to carry clock information according to an embodiment of this application. In FIG. 3, a most significant bit (namely, a 1^{st} bit in FIG. 3) of the byte indicates that the clock information carried by the byte is phase difference information or clock fault information. Specifically, when the most significant bit of the byte is 0, it indicates that the clock information carried by the byte is phase difference information; or when the most significant bit of the byte is 1, it indicates that the clock information carried by the byte is clock fault information.

Optionally, when the clock information carried by the byte is clock fault information, the clock information further includes acknowledgment information carried by a second higher bit, and the acknowledgment information indicates that a downstream device confirms that the clock information is clock fault information. For example, when clock information sent by an intermediate device #1 and received by a downstream intermediate device of the intermediate device #1, for example, an intermediate device #2, is fault information, the intermediate device #2 may re-determine, by calculating whether a system frequency offset or a device burst frequency offset exists, that a current OTN system is faulty, and fill the second bit with 1. Through two confirmations, a false alarm caused by some recoverable abnormal jitters can be avoided in the OTN system, to ensure stable performance of the system.

Optionally, the clock fault information further includes a quantity of faulty devices, namely, a quantity of devices between the faulty devices and a destination device. In other words, after receiving the clock fault information, the destination device can determine locations of the faulty devices based on a quantity recorded in an indication field. It should be understood that the quantity of faulty devices may be indicated by a plurality of bits in the remaining seven bits except the most significant bit. In the structure shown in FIG. 3, the quantity of faulty devices is indicated by five lower bits (for example, a fourth bit to an eighth bit in FIG. 3).

For example, when a device (for example, the intermediate device #1) determines that a clock is abnormal, the intermediate device #1 generates clock fault information. The clock fault information is that a most significant bit of one byte carrying the clock fault information is set to 1, and 1s are recorded in an indication field of a fourth bit to an eighth bit that indicates a quantity of faulty devices, and a data frame carrying the clock fault information is sent to a downstream device. After the downstream device receives the data frame and obtains the clock fault information generated by the intermediate device #1, if the downstream device also determines that the clock is abnormal, the downstream device sets a second bit of the byte carrying the clock information to 1 and changes 1s in the fourth bit to the eighth bit to 2s. According to the same method, downstream devices of the intermediate device #1 sequentially count in the fourth bit to the eighth bit, so that after receiving the clock fault information, the destination device can determine a location of the faulty intermediate device #1 based on the quantity recorded in the indication field.

It should be understood that FIG. 3 shows a possible structure of the clock information by merely using one byte as an example, and this application is not limited thereto. In this application, alternatively, there may be a plurality of bytes carrying clock information. When a plurality of bytes are used to carry clock information, the plurality of bytes may also include an indication field indicating that the carried clock information is phase difference information or clock fault information, or include an indication field carrying the acknowledgment information and an indication field carrying the quantity of faulty devices.

Due to diversity of OTN frame structures (for example, a multi-row multi-column or single-row multi-column structure), in a same OTN frame structure, there may be a plurality of manners of carrying same clock information. In other words, for the same clock information, there are a plurality of possibilities for distribution of locations of a plurality of available bytes in a same data frame. For different OTN frame structures, a plurality of bytes carrying a plurality of pieces of same clock information are also different. The following describes in detail, with reference to the accompanying drawings, a distribution diagram of several bytes that carry clock information in a data frame according to this application, and lists corresponding possible OTN frame structures.

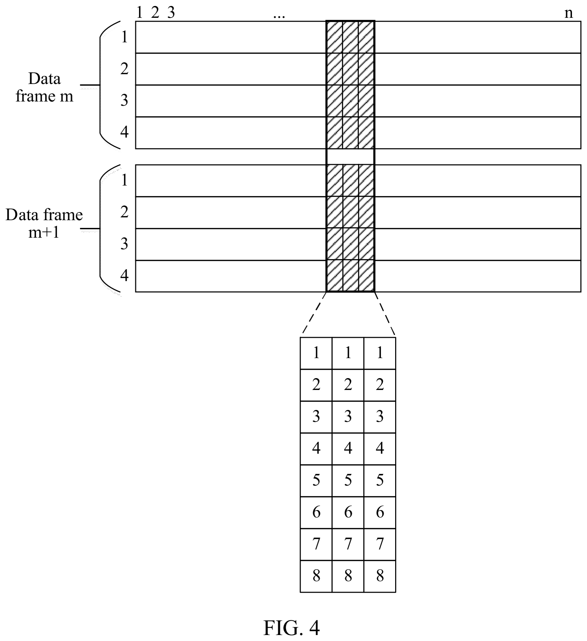

It should be noted that, for ease of description, FIG. 4 to FIG. 11 are all described by using an example in which one byte carries one piece of clock information. In data frames in FIG. 4 to FIG. 11, each column represents one byte.

FIG. 4 is a first distribution diagram of bytes carrying a plurality of pieces of clock information in a data frame according to an embodiment of this application. As shown in FIG. 4, a plurality of bytes carrying a plurality of pieces of clock information are located in a plurality of same columns of all rows of a data frame. In other words, for a multi-row multi-column data frame, a plurality of bytes at a same location in any row of the data frame are used to carry a plurality of pieces of same clock information.

In some embodiments, when a system repeats transmission of same clock information three times, FIG. 4 also shows a possible implementation of carrying the clock information. In FIG. 4, three pieces of same clock information (namely, three 1s, three 2s, ..., three 8s in FIG. 4) are carried in three consecutive columns of a same row of the data frame.

It should be noted that, in FIG. 4, consecutive columns of all rows of the data frame are used to carry clock information. In other words, for the data frame of four rows and n columns in FIG. 4, one data frame may carry clock information generated by a device at four moments. However, this application is not limited thereto. For example, same clock information may be carried in three columns of at least one of the four rows. For example, when any one of the four rows is used to carry clock information, the clock information is clock information corresponding to a data frame, that is, calculation of the clock information is performed on the data frame. For example, a device that generates the clock information calculates a difference between a nominal clock period corresponding to a data frame of the device and a nominal clock period corresponding to a data frame of an adjacent upstream device. When four rows are used to carry clock information, the clock information is clock information corresponding to one row of a data frame, that is, calculation of the clock information is performed on one row of the data frame. For example, a device that generates the clock information calculates a difference between a nominal clock period corresponding to a row of a data frame of the device and a nominal clock period corresponding to a same row of a data frame of an adjacent upstream device.

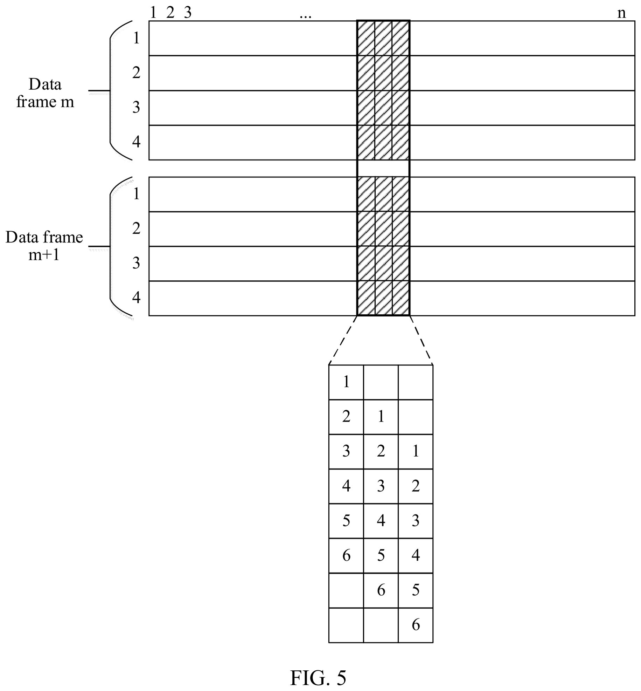

For the distribution diagram of the plurality of bytes shown in FIG. 4, FIG. 5 is a diagram of another possible implementation of carrying clock information according to an embodiment of this application. In FIG. 5, three pieces of same clock information (namely, three 1s, three 2s, ..., three 6s in FIG. 5) are respectively carried in different three columns of three consecutive rows.

It should be noted that, in FIG. 5, because same clock information is repeated three times, a quantity of rows carrying the same clock information and a quantity of columns carrying the same clock information are the same as the repetition quantity of the clock information, and are both 3.

In addition, for a case in which a plurality of pieces of same clock information are carried in a plurality of rows and a plurality of columns of a data frame, and a quantity of rows carrying the same clock information and a quantity of columns carrying the same clock information are the same as a repetition quantity of the clock information, FIG. 5 shows only one carrying manner. For example, the three 1s in FIG. 5 are sequentially carried in corresponding locations from left to right (namely, in a direction in which numbers of columns are in ascending order). Alternatively, there is another manner. For example, the three 1s in FIG. 5 may be sequentially carried in a 1^{st} row to a 3^{rd} row from right to left (namely, in a direction in which numbers of columns are in descending order).

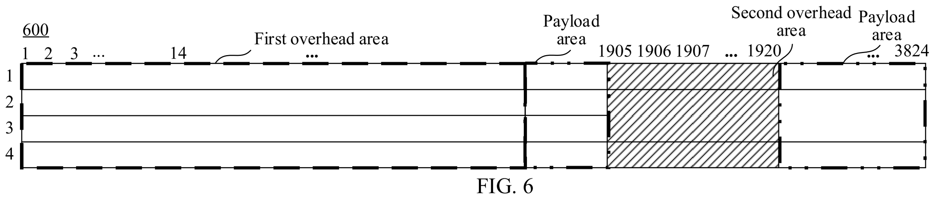

FIG. 6 is a diagram of a structure of an OSU frame 600 based on byte distribution shown in FIG. 4. The OSU frame 600 shown in FIG. 6 consists of 4*3824 bytes, and includes a first overhead area, a second overhead area, and payload areas. The first overhead area is used to carry other overheads of the OSU frame 600, including but not limited to a frame alignment signal (frame alignment signal, FAS), a multi-frame alignment signal (multi-frame alignment signal, MFAS), path monitoring (path monitoring, PM), tandem connection monitoring (tandem connection monitoring, TCM) (including TCM1 and TCM2), an auto-protection switching/protection control channel (auto-protection switching/protection control channel, APS/PCC), and the like. For definitions and functions of these overheads, refer to descriptions in a related protocol. Details are not described herein again. The second overhead area is used to carry a plurality of pieces of clock information. The payload areas are used to carry service data of the OSU frame.

In some embodiments, as shown in FIG. 6, the second overhead area is any three adjacent columns in a 1905^{th} column to a 1920^{th} column of the OSU frame 600. In some other embodiments, the second overhead area is any three adjacent columns in a 1^{st} column to a 14^{th} column of the OSU frame 600.

It should be understood that, in FIG. 6, for a carrying manner of the clock information, refer to FIG. 4 or FIG. 5. Details are not described herein again. It should be further noted that the clock information is overhead information. When the second overhead area is any three adjacent columns in the 1905^{th} column to the 1920^{th} column of the OSU frame 600, the first overhead area and the second overhead area that consists of a plurality of bytes carrying the clock information and that is of the OSU frame 600 are no longer consecutive. In addition, the payload areas of the OSU frame 600 are no longer consecutive.

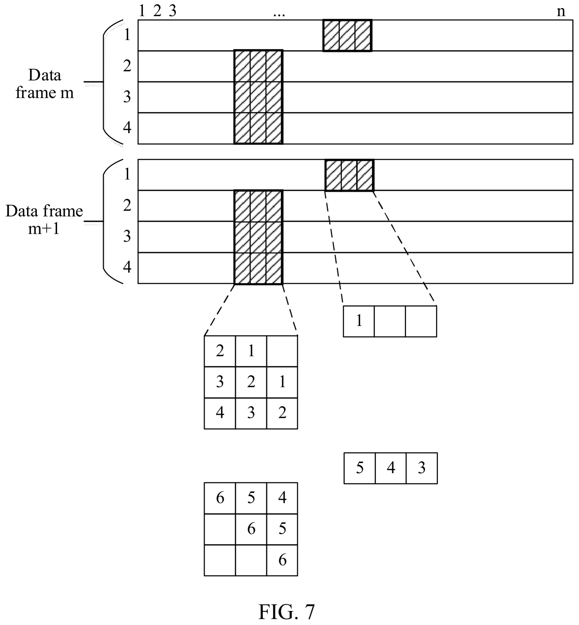

FIG. 7 is a second distribution diagram of bytes carrying a plurality of pieces of clock information in a data frame according to an embodiment of this application. In comparison with the distribution diagram of the plurality of bytes shown in FIG. 4, in FIG. 7, a plurality of consecutive columns of a 1^{st} row of each data frame are no longer at a location same as locations of a plurality of consecutive columns of other rows. In other words, the location of the plurality of consecutive columns of the 1^{st} row of each data frame is different from the locations of the plurality of columns of the other three rows. When a system repeats transmission of same clock information three times, starting from a 1^{st} row of a 1^{st} data frame of the system, groups of every three rows may be used to carry three pieces of same clock information (namely, three 1s, three 2s, ..., three 6s in FIG. 7). It should be understood that every three pieces of same clock information are respectively carried in three different consecutive columns of three consecutive rows.

It should be noted that, because same clock information is repeated three times, in FIG. 7, a quantity of rows carrying the same clock information, a quantity of columns carrying the same clock information, and the repetition quantity of the clock information are all 3. When the system performs transmission of same clock information for another repetition quantity, for example, five times, bytes carrying the clock information are from two adjacent data frames of four rows and n columns, and five consecutive columns of each row are used to carry the clock information.

In addition, for a case in which a plurality of pieces of same clock information are carried in a plurality of rows and a plurality of columns of a data frame, and a quantity of rows carrying the same clock information and a quantity of columns carrying the same clock information are the same as a repetition quantity of the clock information, FIG. 7 shows only one carrying manner, and constitutes no limitation on the protection scope of this application. For example, in FIG. 7, only the location of the plurality of consecutive columns of the 1^{st} row is different from the locations of the plurality of columns of the other rows. In some embodiments, alternatively, a location of a plurality of consecutive columns of a last row may be different from locations of a plurality of consecutive columns of other rows. In other words, this application is not limited to a plurality of consecutive columns of a different location being the plurality of consecutive columns of the 1^{st} row. In some other embodiments, alternatively, locations of consecutive columns of two or even more rows are different from locations of consecutive columns of other rows. In addition, a data frame used to carry clock information in this application is not limited to the structure of four rows and n columns shown in FIG. 7. It should be understood that, for a more general multi-row multi-column data frame structure, a plurality of columns of at least one row of a plurality of rows included in the data frame structure has a location different from that of a plurality of columns of at least another row different from the at least one row in the plurality of rows.

Based on the byte distribution manner shown in FIG. 7, in the OSU frame 600 shown in FIG. 6, the second overhead area is divided into two parts. A first part is an 8^{th} column to a 10^{th} column of a 1^{st} row of the OSU frame 600, or a 9^{th} column to an 11^{th} column of the 1^{st} row. A second part is a 1^{st} column to a 3^{rd} column of a 2^{nd} row to a 4^{th} row of the OSU frame 600.

It should be understood that, in FIG. 7, the carrying manner of clock information shown in FIG. 5 is used as an example. Although locations of bytes used to carry clock information in rows of the OSU frame in FIG. 7 are different, for the carrying manner of clock information shown in FIG. 4, the clock information may still be carried by the bytes shown in FIG. 7. In this case, each row of the data frame shown in FIG. 7 is used to carry same clock information.

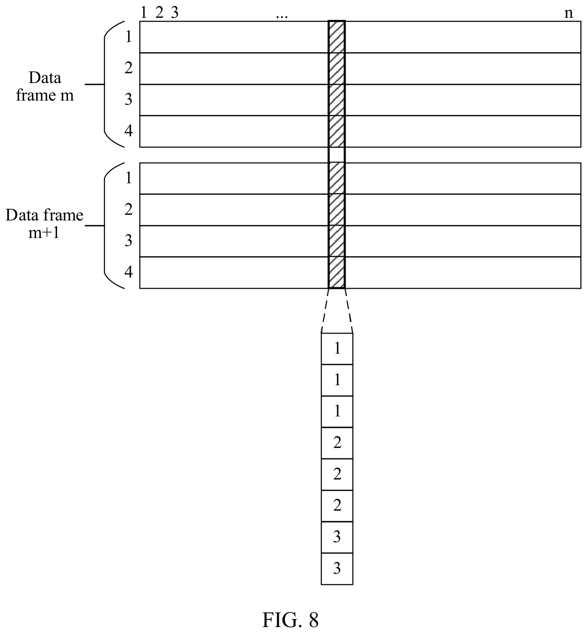

FIG. 8 is a third distribution diagram of bytes carrying a plurality of pieces of clock information in a data frame according to an embodiment of this application. As shown in FIG. 8, bytes carrying a plurality of pieces of clock information are located in a same column of all rows of a data frame. In other words, for a multi-row multi-column data frame, one column in a same location in any row of the data frame is used to carry one piece of clock information.

In some embodiments, when a system repeats transmission of same clock information three times, FIG. 8 also shows a possible implementation of carrying the clock information. In FIG. 8, three pieces of same clock information (namely, three 1s, three 2s, and two 3s in FIG. 8) are sequentially carried in eight consecutive rows of a same column of two data frames. It should be understood that a third piece of clock information 3 is carried in a same column in a 1^{st} row of an (m+2)^{th} data frame.

Based on the implementation of carrying clock information shown in FIG. 8, in the OSU frame 600 shown in FIG. 6, the second overhead area is any one of a 1^{st} column to a 14^{th} column. Alternatively, the second overhead area is any one of a 1905^{th} column to a 1920^{th} column.

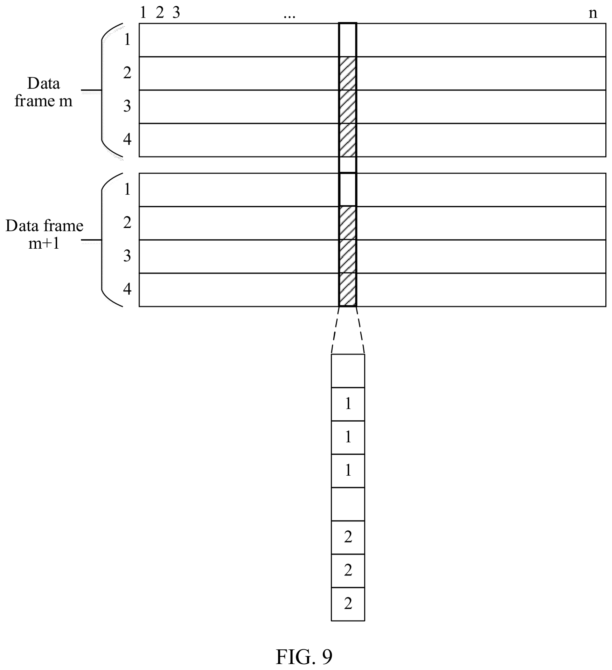

FIG. 9 is a fourth distribution diagram of bytes carrying a plurality of pieces of clock information in a data frame according to an embodiment of this application. In comparison with FIG. 8, each data frame in FIG. 9 carries only three pieces of same clock information (as shown in FIG. 9, a data frame m carries three pieces of clock information 1, and a data frame m+1 carries three pieces of clock information 2).

It should be noted that, for the carrying manners shown in FIG. 8 and FIG. 9, in FIG. 8, clock information carried in one data frame corresponds to different data frames; and in FIG. 9, a plurality of pieces of clock information carried in a same column of consecutive rows in a data frame correspond to a same data frame.

Based on the byte distribution manner shown in FIG. 9, in the OSU frame 600 shown in FIG. 6, the second overhead area is a 1^{st} column of a 2^{nd} row to a 4^{th} row, or the second overhead area is a 3^{rd} column of the 2^{nd} row to the 4^{th} row.

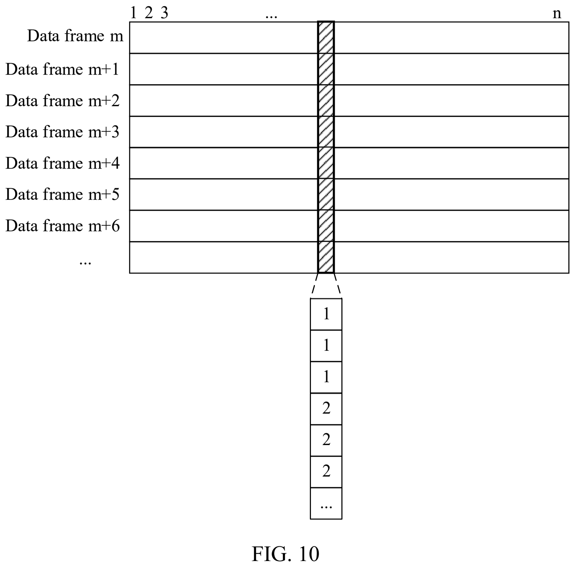

FIG. 10 is a fifth distribution diagram of bytes carrying a plurality of pieces of clock information in a data frame according to an embodiment of this application. As shown in FIG. 10, a data frame carrying clock information has a structure of one row and n columns. Therefore, when transmission of a plurality of pieces of clock information needs to be performed, the plurality of pieces of clock information may be carried in a same column of a plurality of data frames. In other words, for single-row multi-column data frames, a plurality of pieces of clock information are carried in a same column of the plurality of data frames.

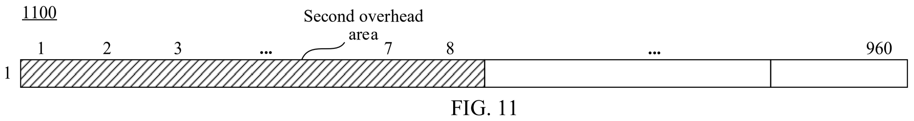

FIG. 11 is a diagram of a structure of an OSU frame 1100 based on byte distribution shown in FIG. 10. In the OSU frame 1100 shown in FIG. 11, a second overhead area is any one of a 1^{st} column to an 8^{th} column.

It should be noted that FIG. 4 to FIG. 11 are all described by using an example in which transmission of same clock information is repeated three times, and constitute no limitation on the protection scope of this application. It should be understood that a quantity of times of repeated transmission of same clock information may be preset in a system. When the quantity of times of repeated transmission of the same clock information increases or decreases, a quantity of bytes that carry the clock information also increases or decreases accordingly. In addition, a manner of carrying the clock information may be any one of the manners shown in FIG. 4, FIG. 5, and FIG. 7 to FIG. 10, or another carrying manner that can be obtained through simple transformation based on any one of the manners shown in FIG. 4, FIG. 5, and FIG. 7 to FIG. 10.

It should be further noted that the distribution manner of the bytes carrying the clock information in FIG. 4 to FIG. 11 and the listed OSU frames are merely examples rather than limitations. It should be understood that embodiments in which the foregoing embodiments are combined with each other shall also fall within the protection scope of this application. For example, any three adjacent columns in the 1^{st} column to the 8^{th} column of the 1 *960-byte OSU frame 1100 shown in FIG. 11 may be used to carry same clock information.

In addition, it can be learned from the foregoing descriptions that, in embodiments of this application, clock information whose transmission is performed through a data frame is decoupled from the data frame. In other words, clock information whose transmission is performed through a data frame is not necessarily only clock information corresponding to the data frame. Specifically, determining should be performed based on a carrying manner of the clock information and a structure of the data frame. For example, in the data frame shown in FIG. 8, the clock information carried in the data frame m includes two types (three 1s and one 2 in FIG. 8), where a 2^{nd} type of clock information is clock information that is of the data frame m+1 and that is generated by the device. To ensure that transmission of all clock information generated by the device can be performed, in embodiments of this application, a periodicity in which any device generates clock information should be greater than a sending periodicity of a data frame. For example, the periodicity of generating the clock information by the device is about 4 ms, and the sending periodicity of the data frame is about 3 ms. In some scenarios, when the device generates the clock information, the data frame is not sent. In this case, the device may store the generated clock information, and when the data frame is sent, replace received clock information of an upstream device that is in the data frame with the newly generated clock information, and send updated clock information to a downstream device through the data frame.

It should be further noted that, the structure of the OSU frame and the locations of the bytes carrying the clock information in the specific OSU frame (for example, the three adjacent columns in the 1905^{th} column to the 1920^{th} column of the OSU frame 600 in FIG. 6) listed in the foregoing embodiments are merely examples rather than limitations.

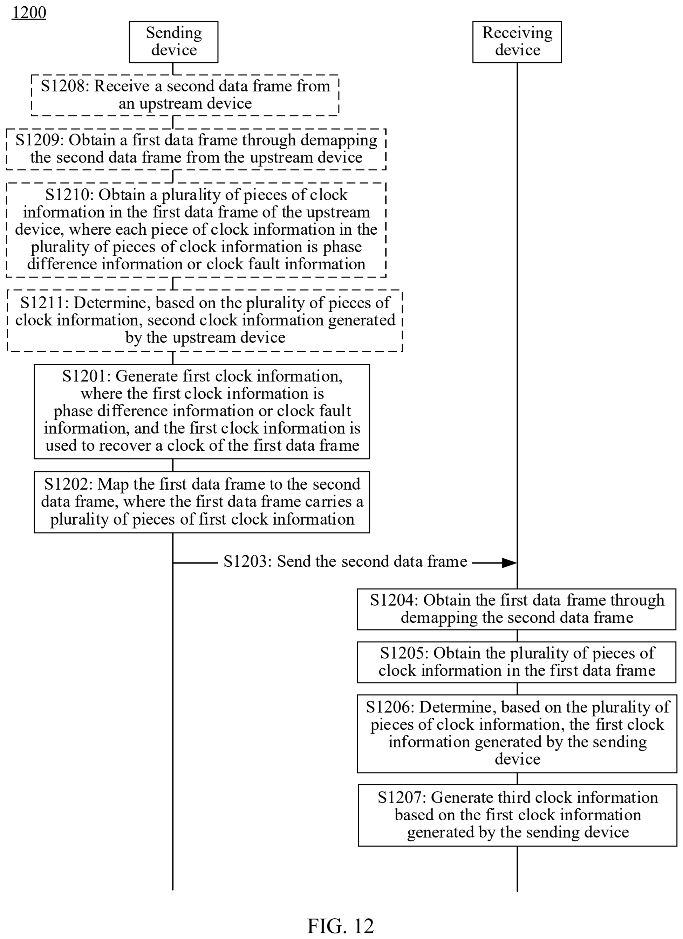

FIG. 12 is a schematic flowchart of a clock information transmission method 1200 according to an embodiment of this application. As shown in FIG. 12, the method 1200 is a schematic flowchart shown from a perspective of device interaction. A sending device may be an OTN device or may be implemented by a component (for example, a chip) of the OTN device. A receiving device may be an OTN device or may be implemented by a component (for example, a chip or a chip system) of the OTN device. Specifically, the method 1200 shown in FIG. 12 includes the following plurality of steps.

S1201: The sending device generates first clock information, where the first clock information is phase difference information or clock fault information, and the first clock information is used to recover a clock of a first data frame.

S1202: The sending device maps the first data frame to a second data frame, where the first data frame carries a plurality of pieces of first clock information.

Specifically, after generating the first clock information, the sending device includes the plurality of pieces of first clock information in the first data frame, and maps the first data frame to the second data frame. For a manner of carrying the plurality of pieces of first clock information, refer to the manner in FIG. 4, FIG. 5, FIG. 7, FIG. 8, FIG. 9, or FIG. 10. For example, when the first data frame is an OSU frame, the sending device includes the generated plurality of pieces of first clock information in the OSU frame, and maps the OSU frame carrying the plurality of pieces of first clock information to an ODU frame. The OSU frame may be of any one of OSU frame structures corresponding to different distribution of the first clock information, for example, including but not limited to any one of the OSU frame structures mentioned above in FIG. 6 and FIG. 11. Details are not described herein again. In addition, for a method for mapping the OSU frame to the ODU frame, refer to the foregoing related descriptions. Details are not described herein again.

S1203: The sending device sends the second data frame to the receiving device.

Specifically, after mapping the first data frame to the second data frame, the sending device sends the second data frame to the receiving device to transfer the first clock information.

S1204: The receiving device obtains the first data frame through demapping the second data frame.

S1205: The receiving device obtains a plurality of pieces of clock information in the first data frame.

Specifically, after demapping the second data frame sent by the sending device, the receiving device obtains the first data frame that carries the plurality of pieces of clock information, and obtains the plurality of pieces of clock information from corresponding bytes of the first data frame in a pre-agreed carrying manner.

S1206: The receiving device determines, based on the plurality of pieces of clock information, the first clock information generated by the sending device.

Specifically, during transmission of the second data frame from the sending device to the receiving device, a bit error occurs in the plurality of pieces of clock information in the first data frame, or a bit error occurs in a process in which the receiving device demaps the first data frame, resulting in inconsistency of the plurality of pieces of clock information obtained by the receiving device. Therefore, the receiving device may perform determining from the plurality of pieces of obtained clock information. For example, the receiving device may determine, from the plurality of pieces of clock information according to a method such as majority decision, the accurate first clock information generated by the sending device.

S1207: The receiving device generates third clock information based on the first clock information generated by the sending device.

Specifically, when the first clock information obtained by the receiving device is phase difference information, the receiving device adds the phase difference information and a locally generated phase difference to obtain updated phase difference information. When the first clock information obtained by the receiving device is clock fault information, the receiving device may determine, based on a status of a local clock, whether the clock fault information is correct. For example, after waiting for a period of time, the receiving device may determine, based on subsequently received first clock information, whether the upstream sending device is indeed faulty or only a transient system jitter occurs, and determine, based on a determining result, that the fault information needs to be updated or accurate phase difference information needs to be waited for.

It should be noted that, in the foregoing clock information transmission method, the sending device may be an intermediate device or a transmitter device. The receiving device may be an intermediate device or a destination device. It should be understood that, when the receiving device is an intermediate device, the third clock information generated by the intermediate device is phase difference information or fault information. When the receiving device is a destination device, the third clock information generated by the destination device may not include fault information. When the first clock information obtained by the destination device is clock fault information, the destination device may determine, based on the clock fault information, that a system is currently in an unstable state. If the fault information further includes at least one of confirmation information or a quantity of faulty devices, the destination device does not perform a clock recovery operation.

It should be further noted that, when the sending device is an intermediate device, the method 1200 may further include the following plurality of steps.

S1208: The sending device receives a second data frame from an upstream device.

S1209: The sending device obtains a first data frame through demapping the second data frame from the upstream device.

S1210: The sending device obtains a plurality of pieces of clock information in the first data frame, where each piece of clock information in the plurality of pieces of clock information is phase difference information or clock fault information.

S1211: The sending device determines, based on the plurality of pieces of clock information, second clock information generated by the upstream device.

It should be noted that S1208 to S1211 may be applied to a case in which bytes carrying the plurality of pieces of clock information are distributed as shown in FIG. 4. It should be understood that, when the plurality of pieces of clock information are located in a same row of the data frame, a delay of processing the plurality of pieces of clock information by a device that receives the plurality of pieces of clock information is small, so that the clock information carried in the first data frame is corrected at each intermediate device, to further improve bit error resilience performance of the system.

It should be understood that for other descriptions of S1208 to S1211, refer to the related descriptions of the receiving device being an intermediate device in S1204 to S1207. Details are not described herein again.

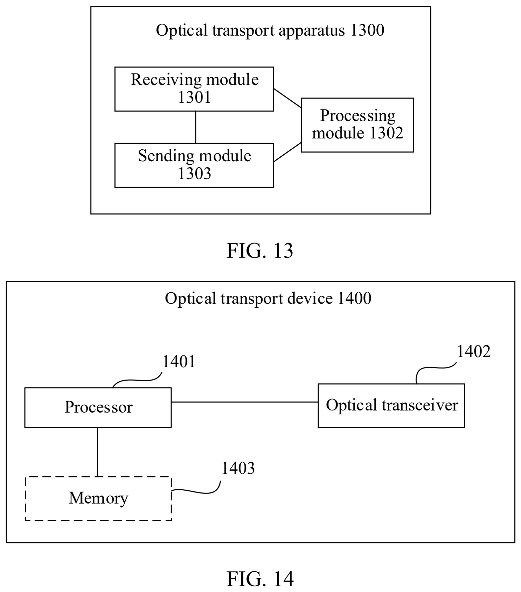

FIG. 13 is a block diagram of an optical transport device 1300 according to an embodiment of this application. The apparatus 1300 includes a receiving module 1301. The receiving module 1301 may be configured to implement a corresponding receiving function. The receiving module 1301 may also be referred to as a receiving unit.

The apparatus 1300 further includes a processing module 1302. The processing module 1302 may be configured to implement a corresponding processing function. The apparatus 1300 further includes a sending module 1303. The sending module 1303 may be configured to implement a corresponding sending function, and the sending module 1303 may also be referred to as a sending unit. Optionally, the apparatus 1300 further includes a storage unit. The storage unit may be configured to store at least one of an instruction, data, and another configuration parameter. The processing module 1302 may read content stored in the storage unit, so that the apparatus implements an action of a related apparatus in the foregoing method embodiments.

The apparatus 1300 may be configured to perform actions performed by the destination device, the sending device, or the intermediate device in the foregoing method embodiments. In this case, the apparatus 1300 may be a component of the destination device, the sending device, or the intermediate device. The receiving module 1301 is configured to perform a receiving-related operation of the destination device, the sending device, or the intermediate device in the foregoing method embodiments. The processing module 1302 is configured to perform a processing-related operation of the destination device, the sending device, or the intermediate device in the foregoing method embodiments. The sending module 1303 is configured to perform a sending-related operation of the destination device, the sending device, or the intermediate device in the foregoing method embodiments.

It should be understood that a specific process in which the modules perform the foregoing corresponding steps is described in detail in the foregoing method embodiments. For brevity, details are not described herein again.

FIG. 14 is a diagram of a possible structure of an optical transport device 1400. The device is a destination device, a sending device, or an intermediate device. As shown in FIG. 14, the device 1400 includes a processor 1401, an optical transceiver 1402, and a memory 1403. The memory 1403 is optional. The device 1400 may be used in both a transmit side device (for example, a sending device) and a receive side device (for example, the foregoing destination device).

When the device is used in the transmit side device, the processor 1401 and the optical transceiver 1402 are configured to implement the method performed by the sending device or the intermediate device shown in FIG. 12. In an implementation process, steps of a processing procedure may be performed by using an integrated logic circuit of hardware in the processor 1401 or instructions in a form of software to complete the method performed by the sending device in the foregoing accompanying drawings. The optical transceiver 1402 is configured to receive an OTN frame sent by the processor, and send the OTN frame to a peer device (also referred to as a receiver device).

When the device is used in the receive side device, the processor 1401 and the optical transceiver 1402 are configured to implement the method performed by the destination device or the intermediate device shown in FIG. 12. In an implementation process, steps of a processing procedure may be performed by using an integrated logic circuit of hardware in the processor 1401 or instructions in a form of software to complete the method performed by the receive side device in the foregoing accompanying drawings. The optical transceiver 1402 is configured to receive an OTN frame sent by a peer device (also referred to as a transmitter device), to send the OTN frame to the processor 1401 for subsequent processing.

The memory 1403 is configured to store instructions, so that the processor 1401 performs the steps mentioned in the foregoing figures. Alternatively, the memory 1403 may be configured to store other instructions, to configure a parameter of the processor 1401 to implement a corresponding function.

It should be noted that, in the diagram of the hardware structure of the network device shown in FIG. 2, the processor 1401 and the memory 1403 may be located in a tributary board, or may be located in a tributary-line integrated board. Alternatively, there are a plurality of processors 1401 and a plurality of memories 1403, which are respectively located in a tributary board and a line board, and the two boards cooperate to complete the foregoing method steps.

It should be noted that the apparatus in FIG. 14 may also be configured to perform method steps in variations of embodiments shown in the foregoing accompanying drawings. Details are not described herein again.

Based on the foregoing embodiments, an embodiment of this application further provides a computer-readable storage medium. The storage medium stores a software program. When the software program is read and executed by one or more processors, the method provided in any one or more of the foregoing embodiments can be implemented. The computer-readable storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement functions in any one or more of the foregoing embodiments, for example, obtain or process an OTN frame in the foregoing methods. Optionally, the chip further includes a memory. The memory is configured to store program instructions and data that are necessary for execution by the processor. The chip may include a chip, or may include a chip and another discrete component.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that when the processor is a general-purpose processor, a DSP, an ASIC, an FPGA or another programmable logic device, a discrete gate or a transistor logic device, or a discrete hardware component, the memory may be integrated into the processor.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the methods, all or some of the methods may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A clock information transmission method, applied to an optical transport device and comprising:
generating first clock information, wherein the first clock information is phase difference information, and the first clock information is used to recover a clock of a first data frame;
mapping the first data frame to a second data frame, wherein the first data frame carries a plurality of pieces of same first clock information; and
sending the second data frame.

2. The method according to claim 1, wherein the first data frame is of a multi-row multi-column structure, the plurality of pieces of same first clock information are respectively carried in a plurality of rows and a plurality of columns of the first data frame, the plurality of rows are consecutive, and the plurality of columns are consecutive.

3. The method according to claim 2, wherein both a quantity of the plurality of rows and a quantity of the plurality of columns are the same as a quantity of the plurality of pieces of same first clock information.

4. The method according to claim 2 or 3, wherein the plurality of pieces of same first clock information are respectively carried in three consecutive rows and three consecutive columns of the first data frame.

5. The method according to any one of claims 1 to 4, wherein the first clock information is generated based on one row of the first data frame.

6. The method according to any one of claims 1 to 5, wherein a quantity of bytes carrying each piece of first clock information is 1.

7. The method according to any one of claims 1 to 6, wherein the plurality of pieces of same first clock information are carried in three adjacent columns in a 1905^{th} column to a 1920^{th} column of any three rows in a 1^{st} row to a 4^{th} row of the first data frame.

8. The method according to any one of claims 1 to 7, wherein a frame structure of the first data frame is 4 rows*3824 columns of bytes.

9. A clock information transmission method, applied to an optical transport device, wherein the method comprises:
receiving a second data frame from an upstream device;
obtaining, through demapping the second data frame from the upstream device, a first data frame from the upstream device;
obtaining a plurality of pieces of same clock information in the first data frame of the upstream device, wherein each piece of clock information in the plurality of pieces of same clock information is phase difference information;
determining first phase difference information based on the plurality of pieces of same clock information, wherein the first phase difference information is first clock information generated by the upstream device; and
generating second clock information based on the first clock information generated by the upstream device.

10. The method according to claim 9, wherein determining the first phase difference information based on the plurality of pieces of same clock information, wherein the first phase difference information is the first clock information generated by the upstream device comprises:
determining, from the plurality of pieces of same clock information in a majority decision manner, the first clock information generated by the upstream device.

11. The method according to claim 9 or 10, wherein generating the second clock information based on the first clock information generated by the upstream device comprises:
adding the first phase difference information and a locally generated phase difference to obtain updated phase difference information, and generating the second clock information based on the updated phase difference information.

12. The method according to any one of claims 9 to 11, wherein the first data frame is of a multi-row multi-column structure, the plurality of pieces of same clock information are respectively carried in a plurality of rows and a plurality of columns of the first data frame, the plurality of rows are consecutive, and the plurality of columns are consecutive.

13. The method according to claim 12, wherein both a quantity of the plurality of rows and a quantity of the plurality of columns are the same as a quantity of the plurality of pieces of same clock information.

14. The method according to claim 12 or 13, wherein the plurality of pieces of same clock information are respectively carried in three consecutive rows and three consecutive columns of the first data frame.

15. The method according to any one of claims 9 to 14, wherein the first clock information is obtained through calculation based on one row of the first data frame.

16. An optical transport apparatus, wherein the optical transport apparatus comprises an optical transceiver and a processor, wherein
the processor is configured to generate first clock information, wherein the first clock information is phase difference information, and the first clock information is used to recover a clock of a first data frame;
the processor is further configured to map the first data frame to a second data frame, wherein the first data frame carries a plurality of pieces of same first clock information; and
the optical transceiver is configured to send the second data frame.

17. The apparatus according to claim 16, wherein the first data frame is of a multi-row multi-column structure, the plurality of pieces of same first clock information are respectively carried in a plurality of rows and a plurality of columns of the first data frame, the plurality of rows are consecutive, and the plurality of columns are consecutive.

18. The apparatus according to claim 17, wherein both a quantity of the plurality of rows and a quantity of the plurality of columns are the same as a quantity of the plurality of pieces of same first clock information.

19. The apparatus according to claim 17 or 18, wherein the plurality of pieces of same first clock information are respectively carried in three consecutive rows and three consecutive columns of the first data frame.

20. The apparatus according to any one of claims 16 to 19, wherein the first clock information is generated based on one row of the first data frame.

21. The apparatus according to any one of claims 16 to 20, wherein a quantity of bytes carrying each piece of first clock information is 1.

22. The apparatus according to any one of claims 16 to 21, wherein the plurality of pieces of same first clock information are carried in three adjacent columns in a 1905^{th} column to a 1920^{th} column of any three rows in a 1^{st} row to a 4^{th} row of the first data frame.

23. The apparatus according to any one of claims 16 to 22, wherein a frame structure of the first data frame is 4 rows*3824 columns of bytes.

24. An optical transport apparatus, wherein the optical transport apparatus comprises an optical transceiver and a processor, wherein
the optical transceiver is configured to receive a second data frame from an upstream device;
the processor is configured to obtain, through demapping the second data frame from the upstream device, a first data frame from the upstream device;
the processor is configured to obtain a plurality of pieces of same clock information in the first data frame of the upstream device, wherein each piece of clock information in the plurality of pieces of same clock information is phase difference information;
the processor is configured to determine first phase difference information based on the plurality of pieces of same clock information, wherein the first phase difference information is first clock information generated by the upstream device; and
the processor is further configured to generate second clock information based on the first clock information generated by the upstream device.

25. The apparatus according to claim 24, wherein the processor is configured to:
determine, from the plurality of pieces of same clock information in a majority decision manner, the first clock information generated by the upstream device.

26. The apparatus according to claim 24 or 25, wherein the processor is configured to:
add the first phase difference information and a locally generated phase difference to obtain updated phase difference information, and generate the second clock information based on the updated phase difference information.

27. The apparatus according to any one of claims 24 to 26, wherein the first data frame is of a multi-row multi-column structure, the plurality of pieces of same clock information are respectively carried in a plurality of rows and a plurality of columns of the first data frame, the plurality of rows are consecutive, and the plurality of columns are consecutive.

28. The apparatus according to claim 26, wherein both a quantity of the plurality of rows and a quantity of the plurality of columns are the same as a quantity of the plurality of pieces of same clock information.

29. The apparatus according to claim 27 or 28, wherein the plurality of pieces of same clock information are respectively carried in three consecutive rows and three consecutive columns of the first data frame.

30. The apparatus according to any one of claims 24 to 29, wherein the first clock information is obtained through calculation based on one row of the first data frame.

31. A chip, wherein the chip comprises a processor and a communication interface, wherein
the processor is configured to read, through the communication interface, instructions stored in a memory, to perform the method according to any one of claims 1 to 8, or the method according to any one of claims 9 to 15.
